# EUROPEAN PATENT APPLICATION

(11) **EP 4 617 105 A1**
(43) Date of publication of application: **17.09.2025**
(21) Application number: 24191185.8
(22) Date of filing: 26.07.2024
(51) Int. Cl.: B60L 53/16, B60L 53/30, H03K 7/08

(54) **CONTROL CIRCUIT AND METHOD OF ELECTRIC VEHICLE SUPPLY EQUIPMENT**

(30) Priority: 11.03.2024 CN 202410269959
(71) Applicant: Delta Electronics, Inc., Taoyuan City 33370 (TW)
(72) Inventor: Lin, Bo-Song, 32063 Taoyuan City (TW); Kao, Ming, 32063 Taoyuan City (TW); Cheng, Chung-Chieh, 32063 Taoyuan City (TW); Fang, Kuan-Hui, 32063 Taoyuan City (TW)
(74) Representative: Uexküll & Stolberg

(57) **Abstract**

A control circuit (1) and a control method of an EVSE are provided. The control circuit (1) includes a signal generator (11), a PWM unit (12), a relay (13) and a detection circuit (14). The signal generator (11) generates a voltage signal. The PWM unit (12) is electrically connected to a control pilot signal (CP) between the EVSE and an electric vehicle. The detection circuit (14) detects the control pilot signal (CP) and generates a detection signal. The control circuit (1) selectively performs a first mode or a second mode, under the first mode, the relay (13) switches the PWM unit (12) to electrically connect with the voltage signal, and under the second mode, the relay (13) switches the PWM unit (12) to electrically connect with the reference voltage (Vref). The control circuit (1) obtains an error value by comparing the detection signals under the first and second modes, and during performing the first mode, the control circuit (1) compensates the control pilot signal (CP) according to the error value.

## Description

### FIELD OF THE INVENTION

The present disclosure relates to a control circuit and method, and more particularly to a control circuit and method of electric vehicle supply equipment.

### BACKGROUND OF THE INVENTION

Nowadays, in the application of electric vehicle charging systems, at the timing of coupling between a charging gum and a coupler of electric vehicle and voltage switching, there is a lack of optimization for the compatible control. This may result in errors in detecting the voltage level switching of the control pilot signal during the coupling and the voltage level switching of the control pilot signal due to differences in the form of the charging gun and coupler. Since the coupler operates in an open-loop and lacks adaptability for compatibility, it is unable to make corresponding adjustments for errors. Therefore, when the errors occur, the charging system may operate abnormally and fail to charge the electric vehicle.

Therefore, there is a need of providing a control circuit and method of electric vehicle supply equipment in order to overcome the drawbacks of the conventional technologies.

### SUMMARY OF THE INVENTION

The present disclosure provides a control circuit and method of electric vehicle supply equipment (EVSE). In the control circuit and method, a reference voltage is introduced, and a detection signal of a control pilot signal under the reference voltage is compared with that under an actual voltage to obtain an error. Further, the control pilot signal under the actual voltage is compensated according to the error. Consequently, the EVSE is enabled to have the ability of detecting the control pilot signal in a closed loop and compensating the error, thereby avoiding interruptions or abnormalities in the charging process of electric vehicle caused by the error.

In accordance with an aspect of the present disclosure, a control circuit of an EVSE is provided. The control circuit includes a signal generator, a PWM (pulse width modulation) unit, a relay and a detection circuit. The signal generator generates a voltage signal. The PWM unit is configured to perform pulse width modulation and is electrically connected to a control pilot signal between the EVSE and an electric vehicle. The relay selectively switches the PWM unit to electrically connect with the voltage signal or a reference voltage. The detection circuit detects the control pilot signal and generates a detection signal accordingly. The control circuit selectively performs a first mode or a second mode, under the first mode, the relay switches the PWM unit to electrically connect with the voltage signal, and under the second mode, the relay switches the PWM unit to electrically connect with the reference voltage. The control circuit obtains an error value by comparing the detection signal under the first mode with the detection signal under the second mode, and during performing the first mode, the control circuit compensates the control pilot signal according to the error value.

In accordance with another aspect of the present disclosure, a control method of an EVSE is provided. The control method includes steps of: (a) providing a signal generator, a PWM unit, a relay and a detection circuit, wherein the signal generator generates a voltage signal, the PWM unit is configured to perform pulse width modulation and is electrically connected to a control pilot signal between the EVSE and an electric vehicle, the relay selectively switches the PWM unit to electrically connect with the voltage signal or a reference voltage, and the detection circuit detects the control pilot signal and generates a detection signal accordingly; (b) selectively performing a first mode or a second mode, wherein under the first mode, controlling the relay to switch the PWM unit to electrically connect with the voltage signal, and under the second mode, controlling the relay to switch the PWM unit to electrically connect with the reference voltage; and (c) obtaining an error value by comparing the detection signal under the first mode with the detection signal under the second mode, and during performing the first mode, compensating the control pilot signal according to the error value.

### BRIEF DESCRIPTION OF THE DRAWINGS

FIG. 1 schematically shows a waveform of the control pilot signal under different states;
FIG. 2 and FIG. 3 schematically show waveforms of the control pilot signal and the output of the EVSE during the charging process;
FIG. 4 is a schematic diagram illustrating a control circuit of an EVSE according to an embodiment of the present disclosure; and
FIG. 5 is a schematic flow chart illustrating a control method of an EVSE according to an embodiment of the present disclosure.

### DETAILED DESCRIPTION OF THE PREFERRED EMBODIMENT

The present disclosure will now be described more specifically with reference to the following embodiments. It is to be noted that the following descriptions of preferred embodiments of this disclosure are presented herein for purpose of illustration and description only.

In electric vehicle charging applications, handshake communication between an electric vehicle supply equipment (EVSE) and an electric vehicle is realized through a control pilot signal therebetween. Corresponding to changes in waveform and voltage level of the control pilot signal, the charging equipment and the electric vehicle operate in different states and perform corresponding actions.

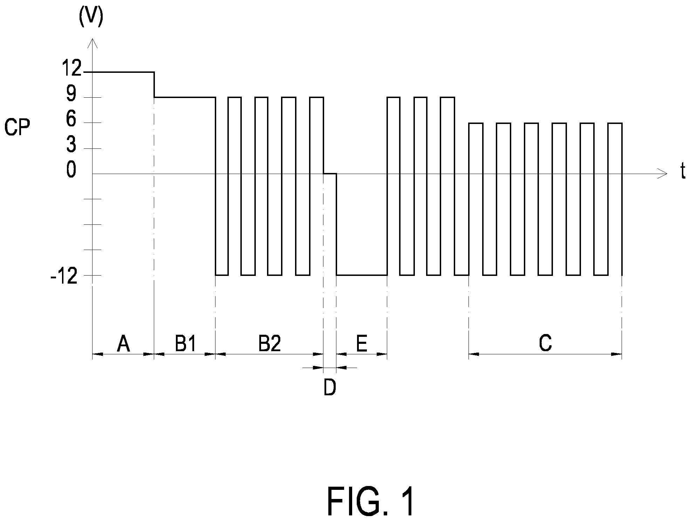

FIG. 1 schematically shows a waveform of the control pilot signal under different states. As shown in FIG. 1, under a state A, the EVSE is not connected to the electric vehicle yet, and the control pilot signal CP is at a first voltage level (e.g., 12V). Under a state B1, the EVSE is connected to the electric vehicle, but the electric vehicle is not ready to receive power. In this circumstance, due to the voltage offset at the electric vehicle side, the control pilot signal CP drops to a second voltage level (e.g., 9V). Under a state B2, similar to the state B1, the EVSE is connected to the electric vehicle, but the electric vehicle is not ready to receive power. At this time, the control pilot signal CP is a pulse width modulation (PWM) signal with a high level at the second voltage level and a low level at a third voltage level (e.g., -12V). Under a state C, the EVSE is connected to the electric vehicle, and the electric vehicle is ready to receive power. In this state, the control pilot signal CP is the PWM signal, the high level of the PWM signal decreases to a fourth voltage level (e.g., 6V) due to the voltage offset at the electric vehicle side, while the low level of the PWM signal remains at the third voltage level (e.g., -12V). Under a state D, the EVSE may experience disconnection, unstable power supply, or other abnormal operating conditions, and the control pilot signal CP is zero. Under a state E, the EVSE may be unable to supply power or has other abnormal operating conditions, and the control pilot signal CP is at the third voltage level (e.g., - 12V).

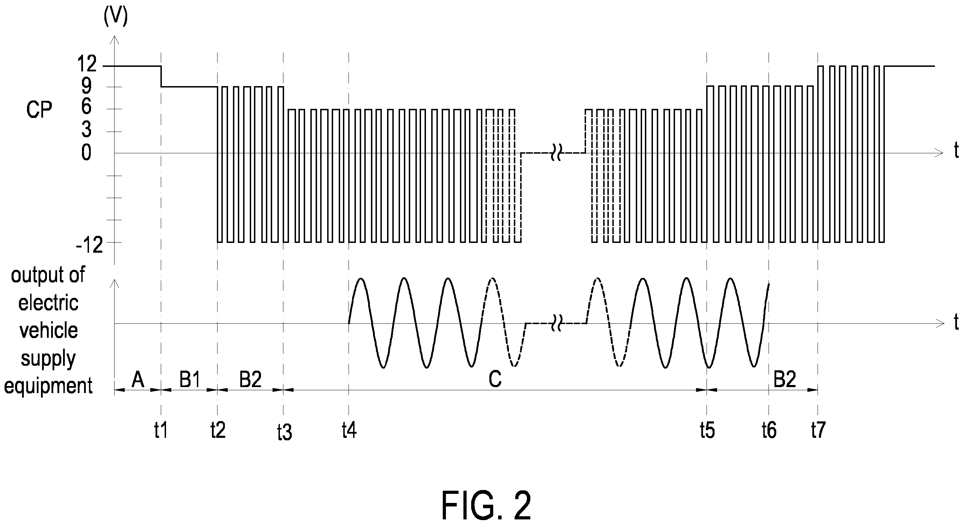

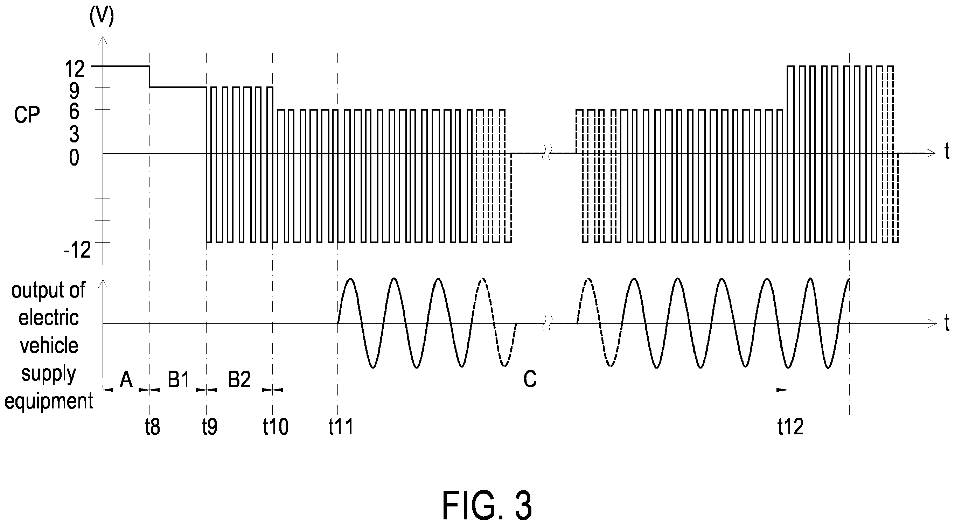

For ease of understanding the waveform variation and corresponding state of the control pilot signal during a charging process of the electric vehicle, FIG. 2 and FIG. 3 schematically show waveforms of the control pilot signal and the output of the EVSE during the charging process. The difference between these two examples is that in the example shown in FIG. 2, the charging is stopped according to a command from the electric vehicle, while in the example shown in FIG. 3, the charging is stopped by disconnecting the electric vehicle (e.g., unplugging the charging gun).

As shown in FIG. 2, at time t1, the EVSE is connected to the electric vehicle, and the corresponding state of the control pilot signal CP changes from the state A to the state B1. At time t2, high-frequency communication begins between the EVSE and the electric vehicle, and the corresponding state of the control pilot signal CP changes from the state B1 to the state B2. At time t3, the electric vehicle is ready to receive power, and the corresponding state of the control pilot signal CP changes from the state B2 to the state C. After a period of time, at time t4, the EVSE starts to supply power to the electric vehicle for charging the electric vehicle. At time t5, the electric vehicle issues a command for stopping charging, and the corresponding state of the control pilot signal CP changes from the state C to the state B2. After a period of time, at time t6, the EVSE stops supplying power. At time t7, the electric vehicle disconnects.

In the example shown in FIG. 3, the process of starting to charge the electric vehicle is similar to that in the example shown in FIG. 2. Specifically, the performed actions and the changes of the control pilot signal CP at times t8, t9, 110 and 111 in FIG. 3 are corresponding to those at the times t1, t2, t3 and t4 in FIG. 2 respectively, and thus detailed descriptions thereof are omitted herein. While in the example shown in FIG. 3, after charging the electric vehicle for a period of time, at time t12, the electric vehicle disconnects, and the EVSE stops supplying power after a short period.

From the foregoing examples, it can be seen that the waveform variation of the control pilot signal closely corresponds to the changes of actions of the EVSE and the electric vehicle. Therefore, the accuracy of detecting the control pilot signal is crucial in electric vehicle charging applications. Any deviation in detecting the control pilot signal may cause the EVSE to stop supplying power to the electric vehicle and interrupt the charging process. In practical applications, there are many factors that may cause the deviation in detecting the control pilot signal. For example, an input impedance of a detection circuit, which detects the control pilot signal, may cause deviation. In addition, when the EVSE is connected to the electric vehicle, different forms of charging guns or different types of electric vehicles (with different couplers) may also lead to different degrees of deviation in detecting the control pilot signal.

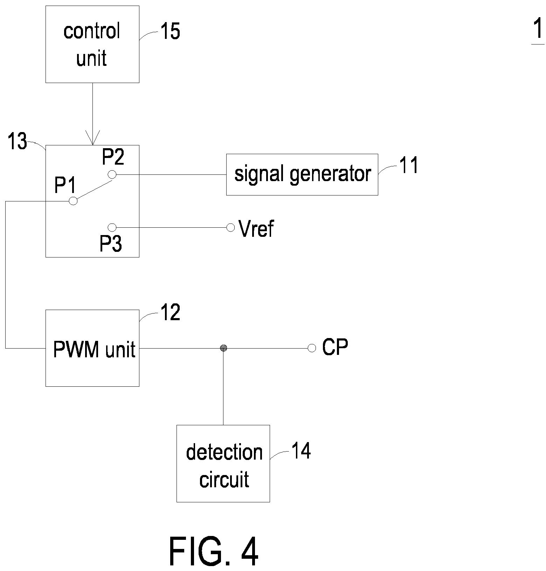

In order to eliminate the deviation for preventing the deviation from affecting the charging process, a control circuit applicable to the EVSE is provided. Please refer to FIG. 4. FIG. 4 is a schematic diagram illustrating a control circuit of an EVSE according to an embodiment of the present disclosure. As shown in FIG. 4, the control circuit 1 includes a signal generator 11, a PWM unit 12, a relay 13 and a detection circuit 14. The signal generator 11 is configured to generate a voltage signal. The PWM unit 12 is configured to perform pulse width modulation on received signals and is electrically connected to the control pilot signal CP between the EVSE and the electric vehicle. The relay 13 selectively switches the PWM unit 12 to electrically connect with the voltage signal generated by the signal generator 11 or a reference voltage Vref. For example, the relay 13 includes a moving contact P1, a first static contact P2 and a second static contact P3 connected to the PWM unit 12, the signal generator 11 and the reference voltage Vref respectively. When the relay 13 switches the moving contact P1 to connect with the first static contact P2, the PWM unit 12 is electrically connected to the signal generator 11 through the relay 13. When the relay 13 switches the moving contact P1 to connect with the second static contact P3, the PWM unit 12 is electrically connected to the reference voltage Vref through the relay 13. The detection circuit 14 is electrically connected to the control pilot signal CP and is configured to detect the control pilot signal CP and generate a detection signal accordingly.

The control circuit 1 selectively performs a first mode or a second mode. Under the first mode, the relay 13 switches the PWM unit 12 to electrically connect with the voltage signal generated by the signal generator 11. Under the second mode, the relay 13 switches the PWM unit 12 to electrically connect with the reference voltage Vref. The control circuit 1 obtains an error value by comparing the detection signal under the first mode with the detection signal under the second mode. Further, during performing the first mode, the control circuit 1 compensates the control pilot signal CP according to the error value. In some embodiments, the signal generator 11 adjusts the voltage signal according to the error value so as to compensate the control pilot signal CP, thereby eliminating the deviation in detecting the control pilot signal CP.

Consequently, the EVSE is enabled to have the ability of detecting the control pilot signal CP in a closed loop and compensating for the deviation in detecting the control pilot signal CP, thereby avoiding interruptions or abnormalities in the charging process of electric vehicle caused by the deviation in detecting.

In addition, as mentioned earlier, when the EVSE is connected to the electric vehicle, different actions are performed by the EVSE and the electric vehicle when the control pilot signal CP is at different voltage levels. For example, the said actions may include high-frequency communication between the EVSE and the electric vehicle, charging the electric vehicle by the EVSE, and stopping charging the electric vehicle by the EVSE. Correspondingly, the reference voltage Vref may include all possible voltage levels of the control pilot signal CP (e.g., 12V, 9V, 6V). Therefore, when the control circuit 1 performs the first mode, regardless of the voltage level of the control pilot signal CP, the error value can be obtained by comparing the detection signal with the detection signal acquired under the reference voltage Vref with the corresponding level in the second mode.

In an embodiment, the control circuit 1 further includes a control unit 15, and the control unit 15 is configured to control the switching of the relay 13 to make the control circuit 1 perform the first mode or the second mode. In an embodiment, when the EVSE is not connected to the electric vehicle or when the EVSE is connected to the electric vehicle without charging the electric vehicle, the control unit 15 controls the relay 13 to switch the PWM unit 12 to electrically connect with the reference voltage Vref, which makes the control circuit 1 perform the second mode. It should be noted that the control circuit 1 may not able to perform the second mode at all times. For example, when the EVSE is charging the electric vehicle, the control circuit 1 should avoid performing the second mode so as to prevent the reference voltage Vref from affecting the waveform of the control pilot signal CP and interrupting the charging.

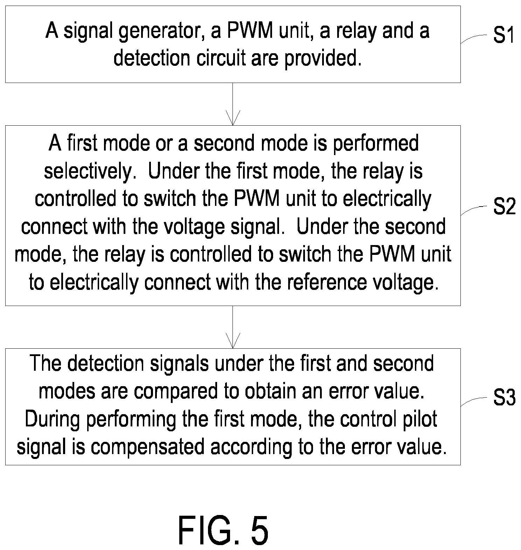

FIG. 5 is a schematic flow chart illustrating a control method of an EVSE according to an embodiment of the present disclosure. This control method is applicable to the control circuit 1 of the above embodiments. As shown in FIG. 5, the control method includes steps S1, S2 and S3. In the step S1, a signal generator 11, a PWM unit 12, a relay 13 and a detection circuit 14 are provided. The signal generator 11 is configured to generate a voltage signal. The PWM unit 12 is configured to perform pulse width modulation and is electrically connected to a control pilot signal CP between the EVSE and the electric vehicle. The relay 13 selectively switches the PWM unit 12 to electrically connect with the voltage signal or a reference voltage Vref. The detection circuit 14 is configured to detect the control pilot signal CP. In the step S2, a first mode or a second mode is performed selectively. Under the first mode, the relay 13 is controlled to switch the PWM unit 12 to electrically connect with the voltage signal. While under the second mode, the relay 13 is controlled to switch the PWM unit 12 to electrically connect with the reference voltage Vref. In the step S3, the detection signal under the first mode is compared with the detection signal under the second mode to obtain an error value, and during performing the first mode, the control pilot signal CP is compensated according to the error value.

In summary, the present disclosure provides a control circuit and method of EVSE. In the control circuit and method, a reference voltage is introduced, and a detection signal of a control pilot signal under the reference voltage is compared with that under an actual voltage to obtain an error. Further, the control pilot signal under the actual voltage is compensated according to the error. Consequently, the EVSE is enabled to have the ability of detecting the control pilot signal in a closed loop and compensating the error, thereby avoiding interruptions or abnormalities in the charging process of electric vehicle caused by the error.

## Claims

1. A control circuit (1) of an EVSE (electric vehicle supply equipment), **characterized by** comprising:
a signal generator (11), generating a voltage signal;
a PWM (pulse width modulation) unit (12), configured to perform pulse width modulation, and electrically connected to a control pilot signal (CP) between the EVSE and an electric vehicle;
a relay (13), selectively switching the PWM unit (12) to electrically connect with the voltage signal or a reference voltage (Vref); and
a detection circuit (14), detecting the control pilot signal (CP) and generating a detection signal accordingly,
wherein the control circuit (1) selectively performs a first mode or a second mode, under the first mode, the relay (13) switches the PWM unit (12) to electrically connect with the voltage signal, and under the second mode, the relay (13) switches the PWM unit (12) to electrically connect with the reference voltage (Vref),
wherein the control circuit (1) obtains an error value by comparing the detection signal under the first mode with the detection signal under the second mode, and during performing the first mode, the control circuit (1) compensates the control pilot signal (CP) according to the error value.

2. The control circuit (1) according to claim 1, further comprising a control unit (15) configured to control switching of the relay (13) to make the control circuit (1) perform the first mode or the second mode, wherein when the EVSE is not connected to the electric vehicle or when the EVSE is connected to the electric vehicle without charging the electric vehicle, the control unit (15) controls the relay (13) to switch the PWM unit (12) to electrically connect with the reference voltage (Vref), which makes the control circuit (1) perform the second mode.

3. The control circuit (1) according to claim 1, wherein the relay (13) comprises a moving contact (P1), a first static contact (P2) and a second static contact (P3) connected to the PWM unit (12), the signal generator (11) and the reference voltage (Vref) respectively, when the relay (13) switches the moving contact (P1) to connect with the first static contact (P2), the PWM unit (12) is electrically connected to the signal generator (11), and when the relay (13) switches the moving contact (P1) to connect with the second static contact (P3), the PWM unit (12) is electrically connected to the reference voltage (Vref).

4. The control circuit (1) according to claim 1, wherein according to the error value, the signal generator (11) adjusts the voltage signal to compensate the control pilot signal (CP).

5. The control circuit (1) according to claim 1, wherein when the EVSE is connected to the electric vehicle, a plurality of actions are performed by the EVSE and the electric vehicle when the control pilot signal (CP) is at a plurality of voltage levels respectively, the plurality of actions comprise high-frequency communication between the EVSE and the electric vehicle, charging the electric vehicle by the EVSE, and stopping charging the electric vehicle by the EVSE, and the reference voltage (Vref) comprises the plurality of voltage levels.

6. A control method of an EVSE, **characterized by** comprising steps of:
(a) providing a signal generator (11), a PWM unit (12), a relay (13) and a detection circuit (14), wherein the signal generator (11) generates a voltage signal, the PWM unit (12) is configured to perform pulse width modulation and is electrically connected to a control pilot signal (CP) between the EVSE and an electric vehicle, the relay (13) selectively switches the PWM unit (12) to electrically connect with the voltage signal or a reference voltage (Vref), and the detection circuit (14) detects the control pilot signal (CP) and generates a detection signal accordingly;
(b) selectively performing a first mode or a second mode, wherein under the first mode, controlling the relay (13) to switch the PWM unit (12) to electrically connect with the voltage signal, and under the second mode, controlling the relay (13) to switch the PWM unit (12) to electrically connect with the reference voltage (Vref); and
(c) obtaining an error value by comparing the detection signal under the first mode with the detection signal under the second mode, and during performing the first mode, compensating the control pilot signal (CP) according to the error value.

7. The control method according to claim 6, further comprising a step of controlling switching of the relay (13) to perform the first mode or the second mode by a control unit (15), wherein when the EVSE is not connected to the electric vehicle or when the EVSE is connected to the electric vehicle without charging the electric vehicle, the control unit (15) is utilized to control the relay (13) to switch the PWM unit (12) to electrically connect with the reference voltage (Vref), so as to perform the second mode.

8. The control method according to claim 6, wherein the relay (13) comprises a moving contact (P1), a first static contact (P2) and a second static contact (P3) connected to the PWM unit (12), the signal generator (11) and the reference voltage (Vref) respectively, when the relay (13) is controlled to switch the moving contact (P1) to connect with the first static contact (P2), the PWM unit (12) is electrically connected to the signal generator (11), and when the relay (13) is controlled to switch the moving contact (P1) to connect with the second static contact (P3), the PWM unit (12) is electrically connected to the reference voltage (Vref).

9. The control method according to claim 6, wherein in the step (c), according to the error value, the signal generator (11) is controlled to adjust the voltage signal to compensate the control pilot signal (CP).

10. The control method according to claim 6, wherein when the EVSE is connected to the electric vehicle, a plurality of actions are performed by the EVSE and the electric vehicle when the control pilot signal (CP) is at a plurality of voltage levels respectively, the plurality of actions comprise high-frequency communication between the EVSE and the electric vehicle, charging the electric vehicle by the EVSE, and stopping charging the electric vehicle by the EVSE, and the reference voltage (Vref) comprises the plurality of voltage levels.
